# EUROPÄISCHE PATENTSCHRIFT

(11) **EP 0 952 042 B1**
(45) Veröffentlichungstag und Bekanntmachung des Hinweises auf die Patenterteilung: **06.08.2003**
(21) Anmeldenummer: 99106477.5
(22) Anmeldetag: 30.03.1999
(51) Int. Cl.: B60R 21/13

(54) **Überrollbügel**
Roll bar
Arceau de sécurité

(30) Priorität: 22.04.1998 DE 29807322 U
(43) Veröffentlichungstag der Anmeldung: 27.10.1999
(73) Patentinhaber: Blechformwerke Bernsbach AG, 08315 Bernsbach (DE); ISE Innomotive Systems Europe GmbH, 51702 Bergneustadt (DE)
(72) Erfinder: Müller, Hartwig, Dr.-Ing., 09126 Chemnitz (DE); Schweier, Robert, Dipl.-Ing., 09221 Neukirchen (DE)
(74) Vertreter: Grünecker, Kinkeldey, Stockmair & Schwanhäusser Anwaltssozietät

(56) Entgegenhaltungen:
- EP-A- 0 676 316
- DE-A- 2 062 446
- FR-A- 2 076 402
- GB-A- 1 213 476
- GB-A- 2 047 180

## Beschreibung

Die Erfindung betrifft einen Überrollbügel der im Oberbegriff des Anspruchs 1 angegebenen Art.

Überrollbügel zum Insassenschutz bei einem Fahrzeugüberschlag sind nicht nur im Automobilrennsport, sondem auch bei offenen oder zu öffnenden Straßenfahrzeugen (Cabriolet oder Roadster) bekannt Der Überrollbügel kann nur einem Insassen oder die Fahrzeugbreite überspannend zwei nebeneinander sitzenden Insassen zugeordnet sein. Der Überrollbügel ist entweder fest eingebaut oder wird bei einer kritischen Fahrsituation schlagartig aufgestellt und verriegelt.

Ein aus EP-A-0 676 316 A1 bekannter Überrollbügel besteht aus U-förmig gebogenen Stahl- oder Leichtmetall-Hohlrohren mit angeformten Befestigungsstellen. Von den Fahrzeugherstellem werden für bestimmte und typische Belastungsfälle und Belastungsrichtungen Lastgrenzen vorgegeben, bis zu denen der Überrollbügel standzuhalten hat. Hauptsächliche Belastungsarten sind eine Druckbelastung von oben auf den Scheitelbereich und eine Biegebelastung quer zur Ebene des Überrollbügels. Die Bruchlast für die Biegebelastung beträgt im Regelfall weniger als die Hälfte der Bruchlast für die Druckbelastung. Die bekannten Überrollbügel aus Metallrohr sind, falls sie die Anforderungen für die Biegebelastung erfüllen, für die Druckbelastung unnötig in etwa doppelt überdimensioniert. Femer sind die bekannten Rohrüberrollbügel schwer. Das hohe Gewicht fordert stabile Befestigungen am Fahrzeugkörper oder bei einem ausfahrbaren Überrollbügel eine leistungsfähige Antriebsmechanik. Bei den Rohrquerschnitt öffnendem Abrieb infolge des auf dem Überrollbügel gleitenden Fahrzeugs werden die Anforderungen relativ bald nicht mehr erfüllt.

Ein aus GB-A-1 313 476 bekannter, gattungsgemäßer Überrollbügel zur festen Eingliederung in das Dach ist aus mehreren ineinandergesetzten Blechkantprofilen aufgebaut, die von einer äußeren, U-förmigen Hülle umgeben werden.

Ein aus DE-A- 2 062 446 bekannter Sicherheitsdachaufsatz für Fahrzeuge ist im Bereich der Dachmittenquerebene durch einen rinnenförmig ausgebildeten Querträger versteift. Der Querträger ist in seinem Trägerquerschnitt nach oben gewölbt oder konkav gewölbt. Der Dachaufsatz ist mit dem integrierten Querträger auf nach oben geführten Mittelsäulen des Fahrzeugaufbaus angeordnet. Der Querträger ist ein Blechformteil und wird von oben durch eine Haube aus Blech oder Kunststoff abgedeckt.

Der Erfindung liegt die Aufgabe zugrunde, einen Überrollbügel der eingangs genannten Art zu schaffen, der wesentlich leichter ist als die bekannten und ohne Überdimensionierung für eine Belastungsart belastungsorientiert ausgebildet ist.

Die gestellte Aufgabe wird erfindungsgemäß mit den Merkmalen des Anspruchs 1 gelöst.

Mit der Abkehr von der Rohrbauweise und Anwendung der Schalenbauweise aus Faserverbundkunststoff mit den als Sicken in die Hauptfläche eingeformten Formstrukturierungen lässt sich der Überrollbügel optimal belastungsorientiert gestalten, wobei erheblich Gewicht in Relation zu Rohr-Überrollbügeln eingespart wird. Moderne Fertigungstechniken in Verbindung mit vorgreifenden FEM-Berechnungen ermöglichen eine exakt belastungsorientierte Formung des Überrollbügels, d.h. ihn an die Anforderungen der Fahrzeughersteller für die Hauptbelastungsfälle Druck und Biegung anzupassen, ohne für einen der Belastungsfälle eine nicht nutzbare Überdimensionierung in Kauf nehmen zu müssen. Durch konsequente Nutzung der Vorteile der Schalenbauweise ergibt sich mit Faserverbundkunststoff eine beträchtliche Gewichtseinsparung, wodurch im Fahrzeug einfachere Befestigungseinrichtungen und/oder leichtere, weil schwächere, Antriebsmechanismen zum Ausfahren und Verriegeln des Überrollbügels einsetzbar sind. Zur Belastungsoptimierung des Überrollbügels dienen die in die Hauptfläche eingeformten Sikken, deren Querschnitt, Orientierung und Form, zweckmäßig durch FEM-Berechnungen, exakt im Hinblick auf die Hauptbelastungsfälle abgestimmt sind. Bis zu 50 % oder mehr Gewicht lässt sich bei dem Überrollbügel aus Faserverbundkunststoff in Schalenbauweise bei gleicher Leistungsfähigkeit wie die eines Rohr-Überrollbügels einsparen. Faserverbundkunststoffe lassen sich mittlerweile problemlos und umweltfreundlich verarbeiten und später wieder verwerten.

Gemäß Anspruch 2 sind insbesondere Glas-, Kohlenstoff- oder Aramidfasem mit Schuss- und Kettfäden in den Gewebelagen hervorragend geeignete Materialien. Die Kunststoffmatrix weist einen thermoplastischen oder einen duroplastischen Kunststoff auf. Besonders geeignet ist Polyamid oder PET für diesen Zweck. Thermoplaste haben zudem den Vorteil eines besonderen Abriebwiderstandes, weil es unter der Reibung (Wärme) zu einer teilweisen Plastifizierung und zu einem Schmiereffekt kommt

Eine problemlose Herstellung mit hoher Formtreue auch bei schwierigen Querschnittsformen ist gemäß Anspruch 3 durch thermisches Umformen von Prepregs unter Einwirkung von Wärme möglich.

Gemäß Anspruch 4 werden die Sicken mit Formen gebildet, die bei minimalem Materialeinsatz eine gleichmäßige Lastverteilung und Belastungsaufnahme sowie die vorbestimmte Lastübertragung an die Abstützstellen im Fahrzeugkörper gewährleisten.

Gemäß Anspruch 5 wird durch eine bewusste Symmetrie bzw. Asymmetrie der Sicken bezüglich der Mitte des Überrollbügels ein Beitrag zur Belastungsoptimierung geleistet. Der Überrollbügel ist für eine zentrale Druckaufnahme in etwa senkrecht von oben symmetrisch, oder für eine seitliche, von außen oben zur Fahrzeugmitte schräg geneigte Belastungsrichtung asymmetrisch ausgebildet

Herstellungstechnisch zweckmäßig werden gemäß Anspruch 6 die Sicken von derselben Seite der Hauptfläche eingepresst. Dies ist insbesondere für einen zweischaligen Aufbau zweckmäßig. Bei einem einschaligen Aufbau wäre es allerdings denkbar, die Sicken abwechselnd oder gruppenweise von unterschiedlichen Seiten der Hauptfläche in diese einzupressen, um dank eines breiteren Gesamtquerschnitts die Stabilität zu steigern.

Gemäß Anspruch 7 tragen auch die Randbereiche zur Aussteifung des Überrollbügels bei, da sie als Formstrukturierungen gestaltet sind. An den Randbereichen angeformte Flansche dienen bei mehrschaligem Aufbau zum Verbinden der Schalen.

Gemäß Anspruch 8 ist der Überrollbügel einstückig einschalig oder doppelschalig ausgebildet, wobei durch die eingeformten Formstrukturierungen den Belastungsanforderungen optimal Rechnung getragen wird.

Manche Fahrzeughersteller schreiben für einen Unfall, bei dem das überschlagene Fahrzeug auf dem Überrollbügel gleitet, vor, dass trotz reibungsbedingten Abriebs die Anforderungen für Druck und Biegung nach wie vor erfüllt werden sollen. Gemäß Anspruch 9 wird dies beim in Schalenbauweise ausgebildeten Überrollbügel durch eine obere Abriebzone und/oder durch Einsätze zum Abriebschutz gewährleistet. Dabei ist es zweckmäßig, die Abriebzone der Schale als energieaufzehrenden Verformungsbereich vorzusehen, und gegebenenfalls einen Einsatz oben aufzusetzen, oder besser unterhalb der Abrieb- oder Verformungszone vorzusehen, damit er den Auftreffkräften nicht gleich direkt ausgesetzt wird. Die Abriebzone ist durch eine Abriebbelastung aufzehrbar, ohne die Lastgrenzen für die Hauptbelastungsfälle zu beeinträchtigen.

Zur Belastungsoptimierung des Überrollbügels ist es gemäß Anspruch 10 zweckmäßig, die Kett- und/oder Schussfäden in den Gewebelagen auf die Hauptbelastungsrichtungen auszurichten, um eine bestimmte Belastungsaufnahme bzw. ein bestimmtes Aufnahmeverhalten zu erzielen.

Anhand der Zeichnung werden Ausführungsformen des Erfindungsgegenstandes erläutert. Es zeigen:
- Fig. 1: eine perspektivische Schemadarstellung eines einschaligen Überrollbügels,
- Fig. 2: eine Perspektivdarstellung eines einschaligen, beispielsweise asymmetrischen Überrollbügels,
- Fig. 3: eine schematische Perspektivdarstellung eines zweischatigen Überrollbügels,
- Fig. 4: drei Querschnittskonfigurationen für eine einschalige oder zweischalige Bauweise des Überrollbügels,
- Fig. 5+6: einen symmetrischen und einen asymmetrischen Überrollbügel, jeweils mit bestimmter Faserorientierung in Gewebelagen,
- Fig. 7: eine Vorderansicht eines umschäumten Überrollbügels,
- Fig. 8: eine Vorderansicht mit zugeordneter Seitenansicht eines Überrollbügels in Schalenbauweise mit einer Abriebzone,
- Fig. 9: eine Vorderansicht mit zugeordneter Seitenschnittansicht eines Überrollbügels in Schalenbauweise mit abriebhemmenden Einsätzen,
- Fig. 10: einen Querschnitt mit zugeordneter Vorderansicht eine weiteren Ausführungsform,
- Fig. 11+12: Schnitte durch weitere Ausführungsformen mit Abriebschutz-Einsätzen, und
- Fig. 13+14: eine weitere Ausführungsform in Ansicht und im Schnitt entlang der Linie XIV-XIV.

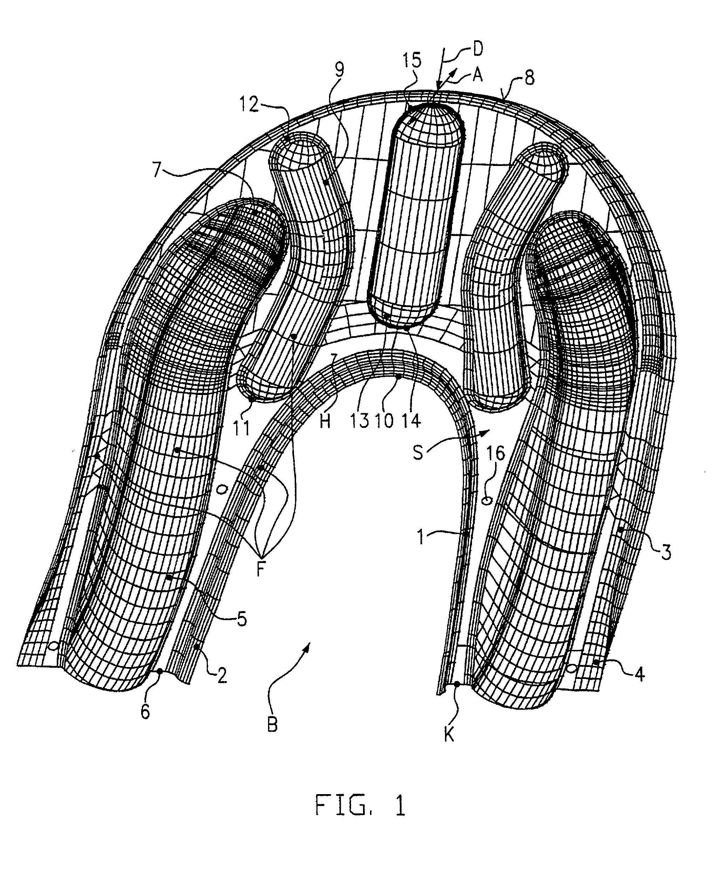

Ein in Fig. 1 zu einer Mittelebene N annähernd spiegelsymmetrischer und in Schalenbauweise gefertigter Überrollbügel B hat eine im Grundzug ebene, U-förmige Konfiguration. Der Überrollbügel B in Fig. 1 ist eine einstückige Schale S, zweckmäßigerweise aus Faserverbundkunststoff K (oder aus Blech bzw. anderem flächigem Verbundmaterial) und weist eine Hauptfläche H auf, die von einem inneren Randbereich 1, der in einem Flansch 2 ausläuft, und einem äußeren Randbereich 3, der in einem Flansch 4 ausläuft, begrenzt. In die Hauptfläche H sind Formstrukturierungen F eingeformt, um dem Überrollbügel B die nötige Festigkeit zu verleihen. Beispielsweise wird der Überrollbügel B in seinem Scheitelbereich 8 durch eine in etwa in Richtung der Mittelebene N gerichtete, vertikale Druckbelastung D im wesentlichen in Richtung der Hauptfläche H beaufschlagt, und/oder durch in Richtung eines Doppelpfeils A gerichtete Biegemomente. in beiden Belastungsfällen muß der Überrollbügel B bis zu bestimmten Lastgrenzen halten.

Die in die Hauptfläche H der Schale S eingeformten Formstrukturierungen F sind die bereits erwähnten Randbereiche 1 und 3 mit ihren Flanschen 2, 4, sowie mehrere Sicken 5, 9, 13, die zweckmäßigerweise alle von derselben Seite der Hauptfläche H in diese eingeformt und, zumindest bei der gezeigten Ausführungsform in etwa zur Mittelebene N spiegelsymmetrisch verteilt sind. In jedem Schenkel des Überrollbügels B verläuft eine relativ tiefe und breite Sicke 5, die im Querschnitt gerundet, gegebenenfalls halbkreisförmig gerundet ist, am Schenkelende 6 beginnt, entlang des äußeren Randbereiches 3 bis über die Höhe der inneren Beuge 10 in Richtung zum Scheitelbereich 8 verläuft und innerhalb des Randbereiches 3 bei 7 endet. Eine weitere Sicke 9 ist stumpfwinklig abgeknickt und reicht mit ihrem unteren Ende 11 in einen Zwickelbereich zwischen der Sicke 5 und dem inneren Randbereich 1 unterhalb der inneren Beuge 10. Das obere Ende 12 der Sicke 9 liegt innerhalb des äußeren Randbereiches 3 und in Bezug auf die innere Beuge 10 höher beim Scheitelbereich 8 als das Ende 7 der Sicke 5. Das Ende 7 der Sicke 5 liegt bei der Beuge der zunächst schräg nach oben gegen die Mittelebene N verlaufenden und dann mit einem gerundeten Knick von der Mittelebene N nach außen schräg wegstrebenden Sicke 9. Die Sicken 5 und 9 sind beiderseits der Mittelebene N angeordnet. Zwischen den beiden Sicken 9 ist eine mittlere, im wesentlichen gerade Sicke 13 vorgesehen, deren unteres Ende 14 in etwa oberhalb der inneren Beuge 10 liegt, und deren oberes Ende 15 nahe beim äußeren Randbereich 1 im Scheitelpunkt des Scheitelbereichs 8 liegt. Die Randbereiche 1 und 3 sind gleichsinnig rund aus der Hauptfläche H abgebogen. In den Hauptflächen H sind mehrere Befestigungsstellen 16 geformt. In die Hauptfläche H könnte auch wenigstens ein freier Druchbruch (nicht gezeigt) eingeformt sein.

Der Faserverbundkunststoff K, aus dem die einstückige Schale S geformt ist, besteht zweckmäßigerweise aus sogenannten Prepregs, d.h. mit Kunststoff imprägnierten Gewebelagen aus Glas-, Kohlenstoff- oder Aramidfasern, die als Schuß- und Kettfäden miteinander verwoben sind. Die Formung der Schale S in Fig. 1 erfolgt z.B. in einer erwärmten Pressform aus einem im wesentlichen flachen Zuschnitt unter Einwirkung von Druck und Temperatur an dem vorgewärmten und gegebenfalls aus mehreren Lagen bestehenden Zuschnitt. Durch das Pressen werden die Gewebelagen in die Kunststoffmatrix eingebettet und ergibt sich die aus Fig. 1 ersichtliche Querschnittskonfiguration mit den Formstrukturierungen F in der Hauptfläche H. Die Hauptfläche H kann im Grundzug eben sein. Es ist aber auch denkbar, ihr in der einen oder anderen Richtung eine räumliche Krümmung zu verleihen, sowie dies durch die Netzlinien in Fig. 1 angedeutet ist.

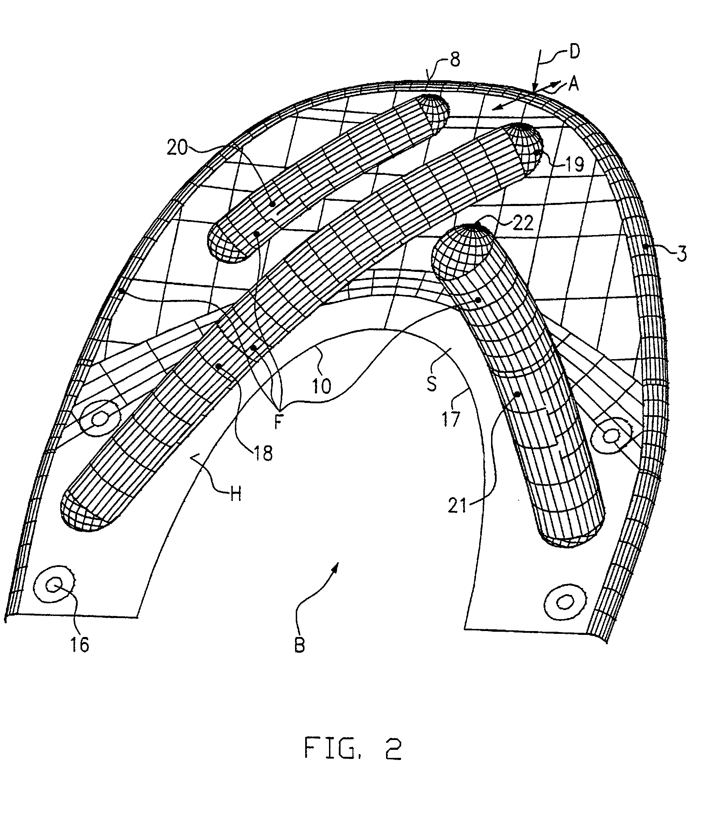

In Fig. 2 ist ein asymmetrischer Überrollbügel B (oder ein symmetrischer Überrollbügel B mit asymmetrischem Lastaufnahmeverhalten) angedeutet. Die Formstrukturierungen F in der einstückig geformten Schale S sind im wesentlichen drei leicht gekrümmt verlaufende Sicken 18, 20 und 21 und der äußere, wie die Sicken gerundete Randbereich 3. Im Bereich der inneren Beuge 10 ist ein flach auslaufender Rand 17 angedeutet, obwohl auch hier der gegenüber der Hauptfläche H gebogene innere Randbereich 1 wie in Fig. 1 vorgesehen sein könnte. In der Hauptfläche H sind pro Schenkel des Überrollbügels B zwei Befestigungsstellen 16, gegebenenfalls mit in die Hauptfläche H integrierten oder gegenüber dieser verformten Lochverstärkungen, eingeformt. Die längste 18 der drei Sicken verläuft zwischen den beiden anderen und beginnt am in Fig. 2 linken unteren Schenkelende. Sie läuft an der inneren Beuge 10 vorbei in Richtung bis zum Scheitelbereich 8, und zwar annähernd ausgerichtet auf den Einleitpunkt der Druckbelastung D (asymmetrische Druckeinleitung) und auch der Einwirkung der Biegemomente in Richtung des Doppelpfeils A. Die Sicke 18 weist eine leichte Krümmung um die Beuge 10 auf. In dem Sichelbereich zwischen der Sicke 18 und dem äußeren Randbereich 3 im linken Schenkel des Überrollbügels B beginnt eine annähernd parallel zur Sicke 18 verlaufende Sicke 20, die ebenfalls zum Scheitelbereich 8 zielt. Die dritte Sicke 21 beginnt im rechten Schenkel zwischen den Befestigungsstellen 16, verläuft mit einer leichten Krümmung um die innere Beuge 10 herum und endet bei 22 in geringem Abstand von der Sicke 18, wobei sie mit dieser annähemd einen Winkel von 80° einschließt.

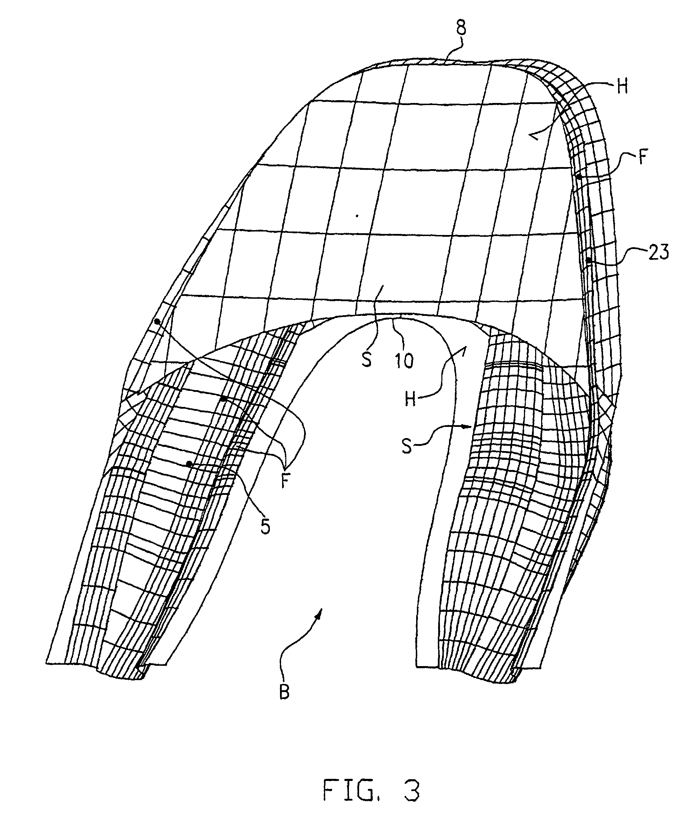

Der Überrollbügel B in Fig. 3 ist aus zwei z.B. miteinander verschweißten Schalen S aus Faserverbundkunststoff K hergestellt, wobei die obere Schale S hier den Bereich der unteren Schale S zwischen der inneren Beuge 10 und dem Scheitelbereich 8 überdeckt. Jede Schale S besitzt eine Hauptfläche H und Formstrukturierungen F. Bei der oberen Schale S sind die Formstrukturierungen im wesentlichen nur der abgebogene Außenrandbereich 23, der in einem Flansch ausläuft, der mit dem Flansch 4 im äußeren Randbereich 3 der unteren Schale S verbunden ist. Die untere Schale S hat Formstrukturierungen F in etwa wie die Schale S in Fig. 1. Die Sicken 5 sind erkennbar, die in die Hauptfläche H eingeformt sind.

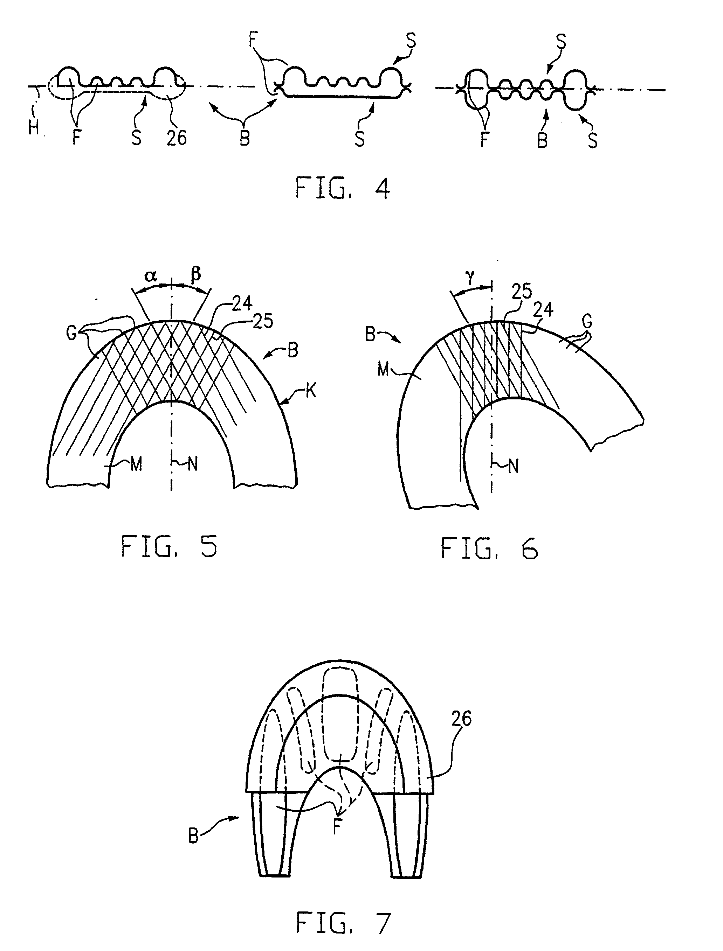

Gemäß Fig. 4 ist der Überrollbügel (im Horizontalschnitt oberhalb der inneren Beuge 10 angedeutet) entweder einstückig einschalig mit in die Hauptfläche H eingeformten Formstrukturierungen F in der Schale S ausgebildet, oder doppelschalig (entsprechend Fig. 3) aus der Schale S mit den Sicken als Formstrukturierungen und aus einer anderen Schale S, die nur im Randbereich verformt ist (zweischalige Schalenbauweise) oder aus den (ganz rechts gezeigt) beiden Schalen S, die entweder gleich (wie in Fig. 1) oder ungleich ausgebildet sind, aber jeweils Formstrukturierungen F besitzen. Bei einer zweischaligen Schalenbauweise können die Schalen miteinander verklebt oder verschweißt sein. In Fig. 3 ist angedeutet, daß der Überrollbügel B einen schützenden und/oder dekorativen Überzug 26 aus Kunststoff, Schaumstoff od. dgl. aufweist. Die Formen gemäß der mittleren und rechten Darstellung von Fig. 4 können auch aus einem schlauchförmigen Vormaterial durch Blasformen hergestellt werden. Die Schalen sind dann einteilig, ohne die aus der Zeichnung ersichtlichen seitlichen Nähte.

Die Fig. 5 und 6 deuten an, daß die Gewebelagen G in der Kunststoffmatrix M Schußund Kettfäden 24, 25 enthalten, die unter Winkeln α, β gegenüber der Mittelebene N zur optimalen Aufnahme der Kräfte schräggestellt sind. Die Winkel α und β könnten beispielsweise in einem Bereich von ± 20 bis 40° liegen und betragen zweckmäßigerweise in etwa ± 25°.

In Fig. 6 ist ein zu einer im Fahrzeugkörper in etwa vertikalen Ebene N asymmetrischer Überrollbügel B mit seiner Kontur dargestellt.. Die Schuß- und Kettfäden 24, 25 der Gewebelagen G oder zumindest einer Gewebelage sind so orientiert, daß sich beispielsweise zwischen den Schußfäden und der Ebene N ein Winkel γ von ebenfalls etwa 25°ergibt, während die Kettfäden annähernd in Richtung der Ebene N verlaufen. Die Winkelangaben zu fig. 5, 6 sind nur Beispiele. Wichtig ist, daß sich mit der Orientierung der Schuß- und/oder Kettfäden in Bezug auf die Krafteinleitungsrichtungen das Kraftaufnahmeverhalten des Überrollbügels B beeinflussen läßt.

Es ist denkbar, in allen Gewebelagen G gleiche Faden-Orientierungen oder unterschiedliche Faden-Orientierungen zu wählen.

In Fig. 7 ist der Überrollbügel B mit einem Überzug 26 (Umschäumung oder Polsterung) mit einem äußeren Wulst gzeigt. Die Schenkel des Überrollbügels B werden am Fahrzeugkörper befestigt oder mit einem Ausfahr- oder Hochschwenk-Antrieb (nicht gezeigt) verbunden. Der Überzug 26 deckt einen Großteil der ggfs. unbehandelten Oberfläche ab (aus ästhetischen Gründen, zum Insassenschutz oder als Witterungsschutz).

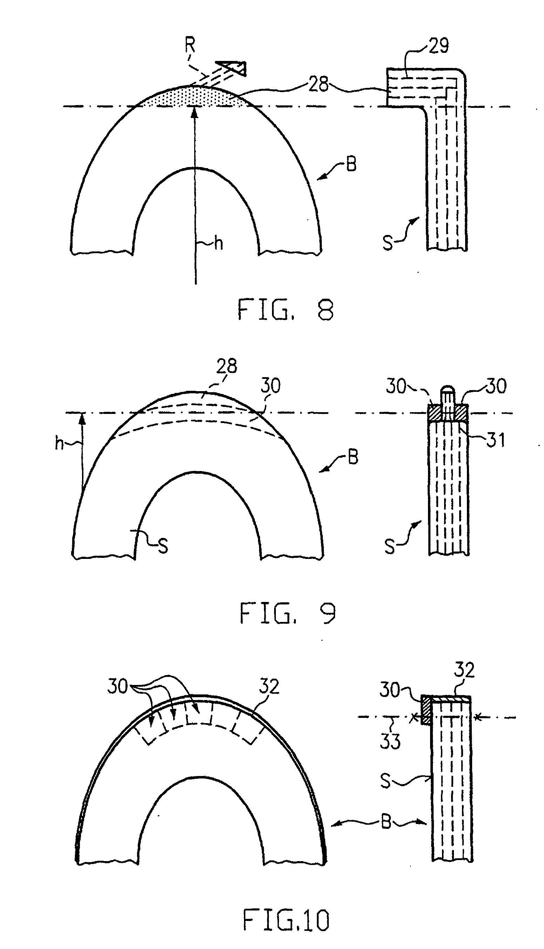

In Fig. 8 ist oberhalb einer vorbestimmten Stützhöhe h des Überrollbügels B, der in Schalenbauweise zweckmäßigerweise aus Faserverbundkunststoff geformt ist, eine Abriebzone 28 vorgesehen, die sich bei Einwirkung von Reibungskräften R (gestrichelt angedeutet) aufzehren läßt, ohne die Druck- und Biegelastgrenzen des Überrollbügels B zu gefährden. In der zugeordneten Seitenansicht von Fig. 8 ist erkennbar, daß der Abriebkopf 28 bei 29 eine durch Abknicken der Schale gebildete Formstrukturierung 29 besitzen kann, um möglichst viel Reib-Energie aufzehren zu können und/oder als zu opfernde Verformungszone zu dienen.

In Fig. 9 ist angedeutet, daß in die Schale S oder in die beiden miteinander verbundenen Schalen S des Überrollbügels B wenigstens ein Einsatz 30 aus abriebhemmendem Material, z.B. Stahl, Keramik, ein Fasergeflecht, Leichtmetall oder ein z.B. gleitfreudiger oder gleitfreudig ausgestatteter Kunststoff, eingesetzt ist. Der Einsatz 30 könnte in die Schale S integriert (eingebettet) sein. Zweckmäßigerweise ist der Einsatz 30 auf einer Schulter 31 oder in einer Tasche der Schale auch formschlüssig festgelegt, um unter den Abrieb- und Stoßkräften an der Schale zu verbleiben. Es ist denkbar, an beiden Außenseiten des Überrollbügels solche Einsätze anzubringen, und zwar an jeder Seite einen einstückigen Einsatz oder mehrere einzelne Einsätze, um Gewicht zu sparen. Der Einsatz 30 sollte etwas tiefer gesetzt sein (wie gezeigt), damit er erst zur Wirkung kommt, nach dem die Verformungszone gewirkt hat, und um ihn nicht direkt von Anfang an der Auftreffkraft des Bodens auszusetzen.

In Fig. 10 ist am Überrollbügel B an zumindest einer Außenseite ein Einsatz 30, z.b. mittels Nieten 33, angebracht, oder sind mehrere einzelne Einsätze, voneinander durch Zwischenabstände getrennt, vorgesehen. Nach oben können die Einsätze durch eine dekorative oder gleitfreudige Abdeckung 32 abgedeckt sein, oder durch den in Fig. 8 angedeuteten Abriebkopf 28.

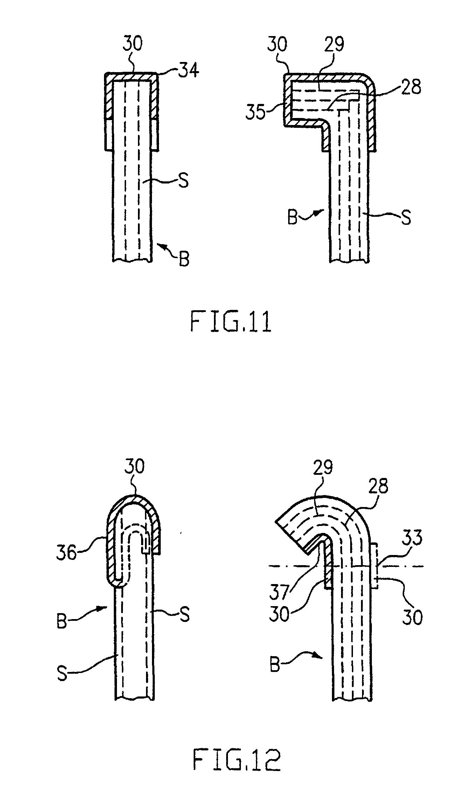

In Fig. 11 ist jeweils in einem Querschnitt der Schale des Überrollbügels B gezeigt, daß der Einsatz 30 nach Art einer im Querschnitt U-förmigen Kappe 34 über die Schale gestülpt ist (im Scheitelbereich 8), oder daß dier Abriebzone 29, 28 entsprechend Fig. 8 kombiniert ist mit einer Kappe 35, die der Einsatz 30 bildet.

In Fig. 12 sind zwei weitere Varianten zum Festlegen des Abriebschutz-Einsatzes 30 an der Schale S des Überrollbügels B angedeutet. In der linken Darstellung greift der Einsatz nach Art einer Kappe 36 über den Scheitelbereich des Überrollbügels und mit einem Stützschenkel durch eine Wand hindurch nach innen, um sich unter Belastung nicht zu lösen. Dies ist eine Befestigungsweise, wie sie z.B. für einen zweischaligen Überrollbügel zweckmäßig sein kann. Bei der rechten Darstellung in Fig. 12 ist die opferbare Abriebzone 29 von Fig. 8 kombiniert mit dem in die innere Beuge der Schale unterhalb der Abriebzone eingesetzten Einsatz 30, der sich in die Hohlkehle einschmiegt und darin, z.B. durch angedeutete Nietungen, festgehalten wird, damit er sich unter Belastung nicht von der Schale S zu lösen vermag.

Mit der Schalenbauweise läßt sich eine belastungsgerechte geometrische Gestaltung unterschiedlicher Überrollbügelkonzepte erzielen. Auch bei Biegung liegt eine momentengerechte Gestaltung vor, wobei eine Überdimensionierung für die Druckbelastung nicht gegeben ist. Die Herstellung jeder Schale erfolgt nicht zwangsweise durch thermisches Umformen (Pressen) möglich, sondern es könnten auch das das Handlaminier-, das RTM-, oder das SMC-, oder andere Verfahren, angewandt werden. Der in Fig. 7 angedeutete Überzug 26, z.B. eine Umschäumung, führt zu einem besseren Insassenschutz bei Kopfstößen und läßt eine gewünschte Optik bzw. dekorative Wirkung erzielen. Es kann auf dem Überzug eine spezielle Deckschicht, z.B. mit der Optik einer Karbonfaser-Armierung, aufgebracht werden. Die Befestigungsstellen 16 können auch Verstärkungen durch Blechelemente zur Reduzierung der Pressung und besseren Verteilung der Kräfte aufweisen. Die Geometrie der Schale läßt sich im Vergleich zum Rohr-Rollbügel hinsichtlich der Lastfälle mit ihren Formstrukturierungen exakt optimieren. Gegenüber einem beispielsweise 2,8 kg schweren Stahlrohrbügel wiegt der Rollbügel aus Faserverbundkunststoff K nur ca. 1,2 kg. Bei ausfahrbaren oder hochschwenkbaren Überrollbügeln führt dies zu kürzerer Ausfahrzeit des Bügels (mehr Sicherheit) und läßt sich der Antriebsmechanismus vereinfachen und leichter gestalten. Die Schalen lassen sich konstruktiv und dekorativ besser in das Konzept des Fahrzeuginnenraums bzw. der Außenhaut einbeziehen. Jede Schale läßt sich relativ frei nach ergonomischen und/oder ästhetischen Gesichtspunkten gestalten. Beim Stahlrohr-Überrollbügel führt Abrieb zu einer Querschnittsschwächung und damit zur empfindlichen Reduzierung der Bruchlast. Bei Überrollbügeln der hier beschriebenen Bauweise hat der Abrieb keinen wesentlichen Einfluß auf die Bruchlast. Die Schalenbauweise kann auch bei Überrollbügeln angewandt werden, die die ganze Fahrzeugbreite überspannen. Dann kann es allerdings zweckmäßig sein, den Überrollbügel aus mehreren einzeln hergestellten Schalenbauteilen oder/und Rohrbauteilen zu kombinieren. Das Energie-Aufzehrverhalten ist vorherbestimmbar und günstiger als bei Rohr-Überrollbügeln, weil ein für die Insassen weniger kritischer gemilderter Aufprall eintritt (gedämpfte oder verzögernde Energieaufzehrung).

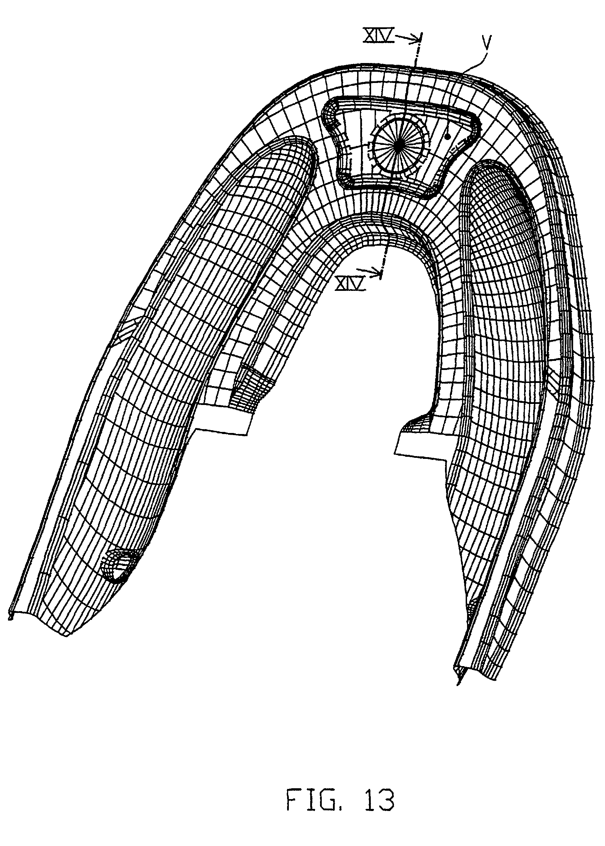

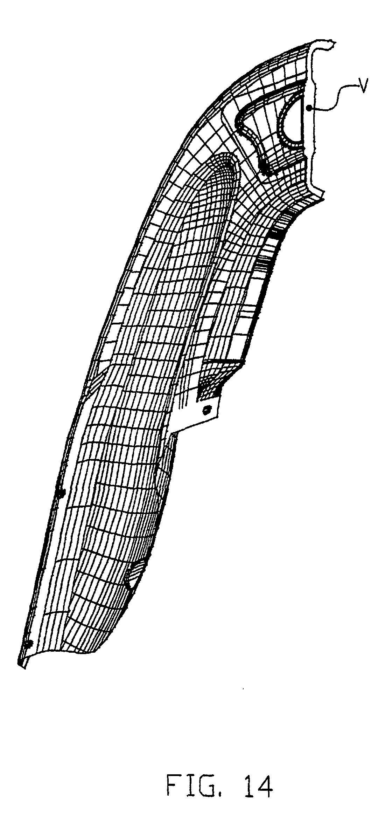

Die in den Fig. 13 und 14 dargestellte Variante unterscheidet sich von derjenigen in Fig. 1 dadurch, daß die drei mittleren Sicken weggelassen sind. Um trotzdem eine ausreichende Steitigkeit zu erreichen, ist die Wandstärke der Schale im oberen Mittelbereich des Bügels verstärkt, wie bei V in Fig. 13 und 14 angedeutet.

## Patentansprüche

1. Überrollbügel für Fahrzeuge, insbesondere für offene Kraftfahrzeuge, der fest oder ausfahrbar am Fahrzeugkörper anbringbar ist, wobei der Überrollbügel (B) in Schalenbauweise mit wenigstens einer Formstrukturierungen (F) aufweisenden Hauptfläche (H) ausgebildet ist, die in Art, Größe und geometrischer Anordnung auf mehrere verschiedene Belastungsrichtungen und/oder Belastungsarten (D, A) des Überrollbügels (B) abgestimmt sind, **dadurch gekennzeichnet, daß** der Überrollbügel (B) aus Faserverbundkunststoff (K) besteht und daß in der Hauptfläche (H) als Formstrukturierungen (F) mehrere im Querschnitt gerundete Sicken (5, 9, 13, 18, 20, 21) mit im wesentlichen zum äußeren Scheitelbereich (8) des Überrollbügels (B) gerichteten Längsorientierungen eingeformt sind, die innerhalb der Randbereiche (1, 3, 17) in der Hauptfläche (H) enden.

2. Überrollbügel nach Anspruch 1, **dadurch gekennzeichnet, dass** der Faserverbundkunststoff (K) aus in eine Kunststoffmatrix (M) eingebetteten Fasergewebelagen (G) aus Glas-, Kohlenstoff-oder Aramidfasergeweben oder Mischgeweben dieser Faserarten, jeweils mit Schuss- und Kettfäden (24, 25) besteht, und dass die Kunststoffmatrix (M) ein thermoplastischer oder duroplastischer Kunststoff ist, vorzugsweise Polyamid oder PET.

3. Überrollbügel nach Anspruch 1, **dadurch gekennzeichnet, dass** der Überrollbügel (B) durch thermisches Umformen von mit Kunststoff imprägnierten Gewebelagen (G) in Form von Prepregs gepresst ist.

4. Überrollbügel nach Anspruch 1, **dadurch gekennzeichnet, dass** die Sicken (5, 9, 13, 18, 20, 21) entlang der Hauptfläche (H) einen geraden, gekrümmten oder stumpf abknikkenden Verlauf ausweisen.

5. Überrollbügel nach Anspruch 1, **dadurch gekennzeichnet, dass** die in der Hauptfläche (H) voneinander getrennten Sicken (5, 9, 13, 18, 20, 21) bezüglich der Mitte (N) des Überrollbügels entweder in etwa spiegelsymmetrisch oder asymmetrisch angeordnet sind.

6. Überrollbügel nach Anspruch 1, **dadurch gekennzeichnet, dass** die Sicken (5, 9, 13, 18, 20, 21) von derselben Seite der Hauptfläche (H) in diese eingeformt sind.

7. Überrollbügel nach Anspruch 1, **dadurch gekennzeichnet, dass** Randbereiche (1, 3, 17) der Schale (S) als weitere Formstrukturierungen (F) aus der Hauptfläche (H) verformt sind, und, vorzugsweise, mit einem zur Hauptfläche (H) versetzten Flansch (2, 4) enden.

8. Überrollbügel nach Anspruch 8, **dadurch gekennzeichnet, dass** der Überrollbügel (B) entweder eine einstückige Faserverbundkunststoff-Schale (S) ist oder aus zwei gleichen oder unterschiedlichen miteinander verbundenen Faserverbundkunststoff-Schalen (S) besteht.

9. Überrollbügel nach Anspruch 1, **dadurch gekennzeichnet, dass** im Scheitelbereich (8) eine Abriebzone (28) und/oder ein Abrieb-Einsatz (30) vorgesehen ist bzw. sind, wobei der Abriebschutz-Einsatz (30) entweder in die Schale (S) eingegliedert oder am Scheitelbereich (8) fixiert oder kappenartig über den Scheitelbereich (8) gestülpt ist.

10. Überrollbügel nach Anspruch 2, **dadurch gekennzeichnet, dass** die Kett- und/oder Schussfäden (24, 25) in jeder Gewebelage (G) bezüglich der Hauptbelastungsrichtungen (D, A) des Überrollbügels (B) mit vorbestimmten Winkeln (α, β,γ) ausgerichtet sind.

11. Überrollbügel nach Anspruch 1, **dadurch gekennzelchnet**, dass die Schale (S) im oberen Mittelbereich (V) frei von Sicken, jedoch mit erhöhter Wandstärke ausgebildet ist.

## Claims

1. A roll bar for vehicles, in particular for topless motor vehicles, which is adapted to be fixedly or retractably attached to the vehicle body, the roll bar (B) being implemented as a shell-construction roll bar comprising at least one main surface (H) provided with shaped structures (F) whose kind, size and geometrical arrangement are adapted to a plurality of different load directions and/or kinds of load (D, A) acting on the roll bar (B), **characterized in that** the roll bar (B) consists of a fibrous composite material (K), and that the main surface (H) has formed therein as shaped structures (F) a plurality of beads (5, 9, 13, 18, 20, 21) having a rounded cross-sectional area and a longitudinal orientation directed essentially towards the outer apex region (8) of the roll bar (B), said beads ending within the edge regions (1, 3, 17) in the main surface (H).

2. A roll bar according to claim 1, **characterized in that** the fibrous composite material (K) consists of layers of woven fibre fabric (G) which are embedded in a plastic matrix (M) and which consist of glass fibres, carbon fibres or aramid fibres, or of blended fabrics of these kinds of fibres, each comprising weft and warp threads (24, 25), and that the plastic matrix (M) is a thermoplastic material or a duroplastic material, preferably polyamide or PET.

3. A roll bar according to claim 1, **characterized in that** the roll bar (B) is pressed by thermal forming layers of fabric (G), which are impregnated with a plastic material, in the form of prepegs.

4. A roll bar according to claim 1, **characterized in that** the beads (5, 9, 13, 18, 20, 21) in the main surface (H) have a shape of such a nature that they are straight, curved or bent at an obtuse angle.

5. A roll bar according to claim 1, **characterized in that** the beads (5, 9, 13, 18, 20, 21), which are separated from one another in the main surfae (H), are arranged such that they are approximately mirror-symmetrical or asymmetrical with regard to the centre (N) of the roll bar.

6. A roll bar according to claim 1, **characterized in that** the beads (5, 9, 13, 18, 20, 21) are pressed into the main surface (H) from the same side of said main surface (H).

7. A roll bar according to claim 1, **characterized in that** edge regions (1, 3, 17) of the shell (S) are deformed from the main surface (H) as additional shaped structures (F) and that said edge regions terminate preferably in a flange (2, 4) which is displaced relative to said main surface (H).

8. A roll bar according to claim 1, **characterized in that** the roll bar (B) is either a one-piece shell (S) consisting of a fibrous composite material, or that it consists of two identical or non-identical interconnected shells (S) of a fibrous composite material.

9. A roll bar according to claim 1, **characterized in that** an abrasion zone (28) and/or an antiattrition insert (30) is/are provided in the apex region (8), said antiattrition insert (30) being either incorporated into the shell (S) or fixed to said apex region (8) or put over said apex region (8) after the fashion of a cap.

10. A roll bar according to claim 2, **characterized in that** the weft and/or warp threads (24, 25) in each layer of fabric (G) are orientated at predetermined angles (α, β, γ) relative to the main load directions (D, A) of the roll bar (B).

11. A roll bar according to claim 1, **characterized in that** the upper central area (V) of the shell (S) is impelemented such that it does not include any beads, but has an increased wall thickness.

## Revendications

1. Arceau de sécurité pour véhicules, en particulier pour véhicules automobiles ouverts susceptible d'être monté à demeure ou de façon déployable sur la carrosserie de véhicule, l'arceau de sécurité (B) étant réalisé en mode de construction en coque, avec au moins une face principale (H), présentant des structurations de forme (F), conçue quant à son type, sa taille et son agencement géométrique pour être adaptée à plusieurs directions de charge différentes et/ou types de sollicitation (D, A) de l'arceau de sécurité, **caractérisé en ce que** l'arceau de sécurité (B) est formé d'un composite à base de matière synthétique renforcé par des fibres (K), et **en ce que**, dans la face principale (H), sont formées en creux, à titre de structurations de forme (F), plusieurs moulures (5, 9, 13, 18, 20, 21) à section transversale arrondie ayant des orientations longitudinales orientées sensiblement vers la zone de sommet (8) extérieure de l'arceau de sécurité (B), orientations s'achevant dans la face principale (H) à l'intérieur des limites des zones de bordure (1, 3, 17).

2. Arceau de sécurité selon la revendication 1, **caractérisé en ce que** le composite à base de matière synthétique renforcé par des fibres (K) est formé des nappes tissées de fibres (G) intégrées dans une matrice en matières synthétiques (M), les nappes étant composées de tissus fibres de verre, de carbone ou d'aramide, ou bien de tissus mélangés de ces types de fibres, chaque fois avec des fils de trame et des fils de chaîne (24, 25), et **en ce que** la matrice de matières synthétiques (M) est une matière synthétique thermoplastique ou thermodurcissable, de préférence du polyamide ou du PET.

3. Arceau de sécurité selon la revendication 1, **caractérisé en ce que** l'arceau de sécurité (B) est pressé sous forme de pré-imprégné par déformation thermique de nappes de tissus (G) ayant été imprégnées de matières synthétiques.

4. Arceau de sécurité selon la revendication 1, **caractérisé en ce que** les moulures (5, 9, 13, 18, 20, 21) présentent, le long de la face principale (H) une allure rectiligne, incurvée ou coudée selon un angle obtus.

5. Arceau de sécurité selon la revendication 1, **caractérisé en ce que** les moulures (5, 9, 13, 18, 20, 21) séparées les unes des autres, situées dans la face principale (H), sont disposées, par rapport au centre (N) de l'arceau de sécurité, soit en répondant à peu près à une symétrie spéculaire, soit de façon asymétrique.

6. Arceau de sécurité selon la revendication 1, **caractérisé en ce que** les moulures (5, 9, 13, 18, 20, 21) sont formées en creux du même côté de la face principale (H), dans celle-ci.

7. Arceau de sécurité selon la revendication 1, **caractérisé en ce que** des zones de bordure (1, 3, 17) de la coque (S) sont formées en tant que structurations de formes (F) supplémentaires de. la face principale (H) et s'achèvent de préférence avec un rebord (2, 4) décalé par rapport à la face principale (H).

8. Arceau de sécurité selon la revendication 7, **caractérisé en ce que** l'arceau de sécurité (B) est formé, soit d'une coque (S) monopièce en un composite de matières synthétiques renforcé par des fibres, soit de deux coques (S) en matières synthétiques renforcés par des fibres, identiques ou différents, reliées ensemble.

9. Arceau de sécurité selon la revendication 1, **caractérisé en ce que** dans la zone de sommet (8) est prévue une zone d'abrasion (28) et/ou un insert d'abrasion (30), l'insert de protection contre l'abrasion (30) étant, soit intégré dans la coque (S), soit fixé sur la zone de sommet (8), soit évasé en forme de capuchon au-dessus de la zone de sommet (8).

10. Arceau de sécurité selon la revendication 2, **caractérisé en ce que** les fils de chaîne et/ou de trame (24, 25), dans chaque nappe de tissus (G), sont orientés sous des angles (α, β, γ) prédéterminés par rapport aux directions de sollicitation principales (D, A) de l'arceau de sécurité (B).

11. Arceau de sécurité selon la revendication 1, **caractérisé en ce que** la coque (S) est réalisée, dans la zone centrale supérieure (V), de façon exempte de moulure, cependant avec une épaisseur de paroi augmentée.
